# EUROPÄISCHE PATENTSCHRIFT

(11) **EP 0 545 036 B1**
(45) Veröffentlichungstag und Bekanntmachung des Hinweises auf die Patenterteilung: **17.11.1994**
(21) Anmeldenummer: 92117291.2
(22) Anmeldetag: 09.10.1992
(51) Int. Cl.: B60K 13/02

(54) **Luftansaugsystem für die Brennkraftmaschine in LKW**
System for the air supply of a combustion engine of a heavy duty vehicle
Système de prise d'air d'un moteur à combustion d'un véhicule poids lourds

(30) Priorität: 29.11.1991 DE 9114859 U
(43) Veröffentlichungstag der Anmeldung: 09.06.1993
(73) Patentinhaber: MAN Nutzfahrzeuge Aktiengesellschaft, 80976 München (DE)
(72) Erfinder: Rieck, Gerhard, Dipl.-Ing., W-8000 München 60 (DE); Schöneckert, Robert, W-8000 München 50 (DE); Knetsch, Holger, W-8060 Dachau (DE)

(56) Entgegenhaltungen:
- AT-A- 338 113
- DE-A- 1 430 160
- GB-A- 771 619
- US-A- 4 366 878
- US-A- 4 378 945

## Beschreibung

Die Erfindung bezieht sich auf ein Luftansaugsystem für den Verbrennungsmotor in einem Lastkraftwagen mit einem unterhalb des Fahrerhauses vor oder hinter den Vorderrädern angeordneten Luftfilter.

Der Erfindung liegt die Aufgabe zugrunde, Zugänglichkeit und Raumbedarf für das Luftansaugsystem zu optimieren.

Dies wird erfindungsgemäß dadurch erreicht, daß ein Verbindungskanal zwischen der Luftansaugöffnung und dem Luftfilter, als Teil des Innenkotflügels ausgebildet, ganz oder teilweise unterhalb des Fahrerhausbodens, diesem konturengleich eng anliegend, verläuft. Die Luftansaugstellen müssen so angeordnet sein, daß im Fahrbetrieb möglich saubere Luft angesaugt wird, damit das Filter ausreichende Standseiten hat. Dies kann solcherart geschehen, indem das Filter je nach Platzverhältnis hinter das Fahrerhaus an den Rahmen, hinten unter das Fahrerhaus oder vorne unter das Fahrerhaus montiert wird. Die nun örtlich sehr unterschiedlich angebrachten Teile, nämlich Luftansaugöffnung und Filter, sind gemäß der Ausführung der Neuerung auf sehr vorteilhafte Art und Weise und ohne Vergabe von zusätzlichem Platz durch die erfinderische Ausbildung und Anpassung an vorhandene Baugegebenheiten miteinander verbunden. Der Verbindungskanal ist fest mit dem Fahrerhaus verbunden und wird mit diesem gekippt. Verbindungskanal und Filter sind in bekannter Weise durch eine elastische Trennstelle miteinander verbunden.

Die Neuerung ist in zwei Ausführungsbeispielen dargestellt und beschrieben.

Es zeigen:
- Fig. 1: ein Luftansaugsystem im Fahrerhaus eines Lkw
- Fig. 2: Variante eines Luftansaugsystems in einem Lkw.

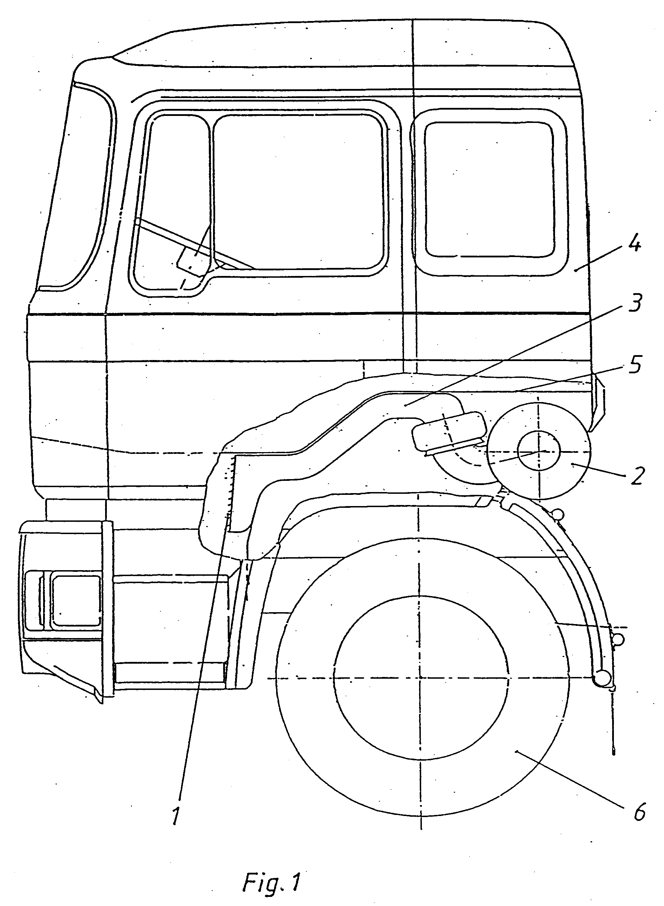

Gemäß Fig. 1 liegt die Luftansaugöffnung 1 unterhalb des Fahrerhausbodens 5 vor den Vorderrädern 6. Unterhalb des rückwärtigen Endes des Fahrerhauses 4 ist der Filter 2 querliegend zur Fahrtrichtung angeordnet. Filter 2 und Ansaugöffnung 1 sind mittels eines Verbindungskanals 3 verbunden, wobei zwischen dem mit dem Rahmen fest verbundenen Filter 2 und dem am schwenkbaren Fahrerhaus 4 befestigten Verbindungskanal 3 eine muffenartige, selbstzentrierende Trennstelle vorgesehen ist. Der Verbindungskanal 3 ist Teil des Innenkotflügels und liegt konturengleich dem Fahrerhausboden 5 eng an.

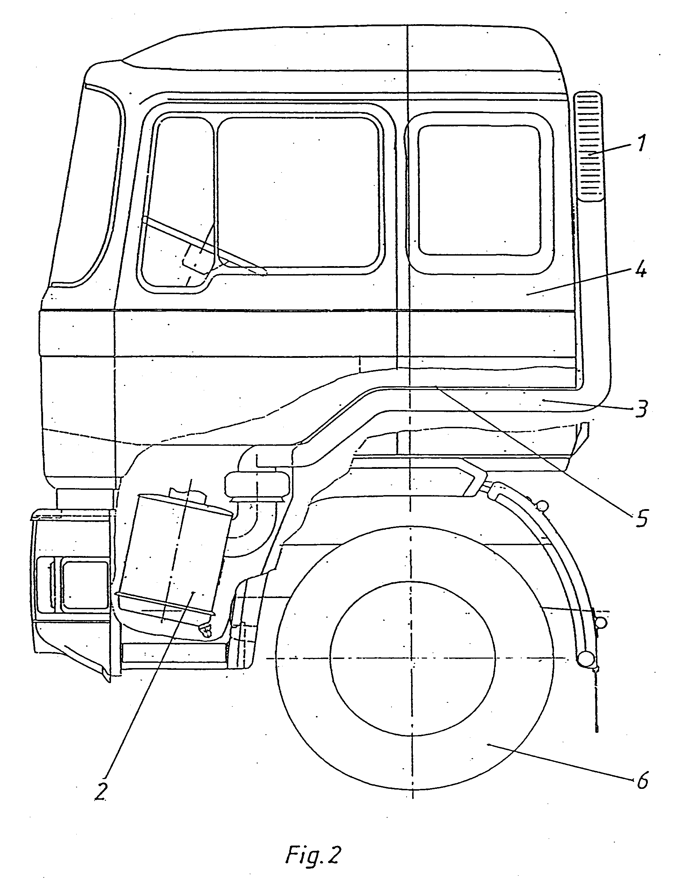

Abweichend von Fig. 1 ist das Filter 2 in Fig. 2 vor den Vorderrädern angeordnet und die Luftansaugöffnung hinter dem Fahrerhaus und zwar in dessen oberen Bereich, wo mit relativer Reinluft gerechnet werden kann. Im übrigen gelten für die Anbringung des Verbindungskanals die gleichen Modalitäten wie bei Fig. 1.

### Bezugszeichenliste

- 1: Luftansaugöffnung
- 2: Luftfilter
- 3: Verbindungskanal
- 4: Fahrerhaus
- 5: Fahrerhausboden
- 6: Vorderräder

## Patentansprüche

1. Luftansaugsystem für den Verbrennungsmotor in einem Lastkraftwagen mit einem unterhalb des Fahrerhauses, insbesondere eines kippbaren Fahrerhauses, vor oder hinter den Vorderrädern angeordneten Luftfilter, dadurch gekennzeichnet, daß ein Verbindungskanal (3) zwischen einer Luftansaugöffnung (1) und einem Luftfilter (2), als Teil des Innenkotflügels ausgebildet, ganz oder teilweise unterhalb des Fahrerhausbodens (5), diesem konturengleich enganliegend, verläuft.

## Claims

1. Air intake system for the internal combustion engine in a truck with an air filter installed below the cab, particularly a tilt cab, before or after the front wheels, characterised in that a connection channel (3) between an air intake opening (1) and an air filter (2) is formed as part of the inner mudguard and runs entirely or partially below the cab floor (5), closely following the contours of the said cab floor (5).

## Revendications

1. Système de prise d'air pour le moteur à combustion d'un véhicule poids lourd avec un filtre à air disposé en dessous de la cabine du conducteur, de préférence d'une cabine de conducteur qui peut basculer, devant ou derrière les roues avant, système de prise d'air, caractérisé en ce qu'un canal de liaison (3) situé entre un orifice de prise d'air (1) et un filtre à air (2), ce canal faisant partie de l'aile intérieure de la carrosserie, s'étend en totalité ou en partie en dessous du plancher de la cabine du conducteur (5) en suivant de façon identique son contour.
